# EUROPEAN PATENT APPLICATION

(11) **EP 1 137 248 A2**
(43) Date of publication of application: **26.09.2001**
(21) Application number: 01200253.1
(22) Date of filing: 24.01.2001
(51) Int. Cl.: H04N 1/00, H04N 1/21

(54) **Proactive imaging system**

(30) Priority: 04.02.2000 US 498568
(71) Applicant: EASTMAN KODAK COMPANY, Rochester, New York 14650 (US)
(72) Inventor: Schildkraut, Jay S., Rochester, New York 14650-2201 (US); Willand, Craig S., Rochester, New York 14650-2201 (US)
(74) Representative: Lewandowsky, Klaus, Dipl.-Ing.

(57) **Abstract**

A proactive imaging system includes proactive image having image data and an associated software agent for determining operations to be applied to the digital image data, the operations including image processing and communicating the digital image data, and for initiating the determined operations; a communication network; a client computer connected to the communication network for activating the software agent in the proactive image; and a server connected to the communication network, the server including means for processing displaying or storing the digital image.

## Description

The present invention relates to image processing, communication, and display systems. In particular such systems that are employed to perform digital photofinishing services.

The beginning of an imaging chain generally includes an image capture device such as a camera or scanner. The camera may be a film camera that contains a light sensitive photographic emulsion and stores the image as a latent image, or an electronic camera that contains a light sensor and stores the image in electronic memory. The end of the chain, which may be referred to as image output, generally includes a display device such as a printer for making a permanent version of the image, or soft display device, such as a computer monitor or television screen.

In between image capture and image output it is desirable to process the image. This is because the captured image is often not suitable for the output stage. For example, the captured image may have a large variation in the light level of bright and dark regions. If the image is printed, due to limitations of print media, the image detail in either the dark or bright regions will be lost. Another example is that cameras often produce an image defect that is commonly referred to as redeye. Redeye occurs when the pupils of people in the image appear red due to the reflection of light from the flash unit off of the retina. This results in a highly objectionable appearance of faces in a printed or displayed image. There is a multitude of other image processing that may be applied to an image including but not limit to the following: detection of images that are duds so that media is not wasted by printing them; the detection of excellent images that should be printed multiple times, enlarged, placed in an album; increasing the sharpness of the image; cropping the image to emphasize the main subject; removing the affect of dust and scratches from the image; and improving the color of the image.

The current method of image processing is to represent an image as passive data that is input to a chain of image processing routines. Recently, meta-data has been included with the image. The meta-data consists of additional information such as subject distance, light level, and whether the flash fired. One use of meta-data is to increase the efficiency of image processing.

A problem arises however because there is an ever increasing number of possible image processing and image understanding algorithms that can be applied to an image to improve the quality and usage of the image. Furthermore, the number of images that are captured and require processing is immense and growing. The problem with the current system is the reliance on a centralized image processing system to process every single image in the system in order to determine if some action needs to be taken to improve the quality or optimally use the image. This results in an unacceptably slow system throughput or requires very expensive computational means.

U. S. Patent No. 5,913,088, issued June 15, 1999, to Moghadam et al., entitled :"Photographic System Capable of Creating and Utilizing Applets on Photographic Film" discloses a photographic system capable of creating and utilizing applets on photographic film. The applets, or a link to the applets are stored on a magnetic layer of the film, and are programs that can be use to process a digital image derived by scanning an image on the film. Although this is concept useful, it is limited by the fact that the applet is not self executing. Specific instructions need to be provided by an operator to an image processor to apply the applet to the digital image data. There is a need therefore for an improved photographic system that does not require operator intervention.

U. S. Patent No. 5,974,201, issued October 26, 1999 to Chang et al., entitled "Smart Image System" discloses a smart image system that provides image data with a knowledge structure consisting of protocols, hot spots, active indexes, and attributes. The smart images automatically respond to environmental changes. This concept is useful, but the smart image system does not provide a means for the image to be processed in the sense that pixel values are modified. Furthermore, it does not provide a means for automatically determining image content without input from a human.

The need is met according to the present invention by providing an imaging system in which image data is combined with a proactive self executing agent that determines what processing is necessary, and automatically obtains the necessary processing. Instead of an image being passive data it becomes an active component that has the means of determining the operations such as processing storing, communication and printing that is required and the means to obtain the necessary processing.

According to one aspect of the invention, a proactive imaging system includes a proactive image having image data and an associated software agent for determining operations to be applied to the image data, the operations including image processing and communicating the digital image data, and for initiating the determined operations; a communication network; a client computer connected to the communication network for activating the software agent in the proactive image; and a server connected to the communication network, the server including means for processing displaying or storing the digital image.

In one embodiment, the image is a digital image and the software agent is a computer program associated with the image, either directly, or by means of a reference to the location of the program on a communication network. According to an alternative embodiment, the image is a hard copy image, and the software agent is associated with the image by means of a coded message on the image indicating the location of the computer program on a communication network.

The proactive imaging system according to the present invention has the advantage that no human intervention is needed to determine and effect the operations that are performed on the digital image data once the image component is created and activated.
Fig. 1 is block diagram showing the proactive imaging system according to the present invention;
Fig. 2 is a data structure showing one embodiment of a proactive image including an agent according to the present invention; and
Fig. 3 is a block diagram showing the structure of the agent shown in Fig. 2.

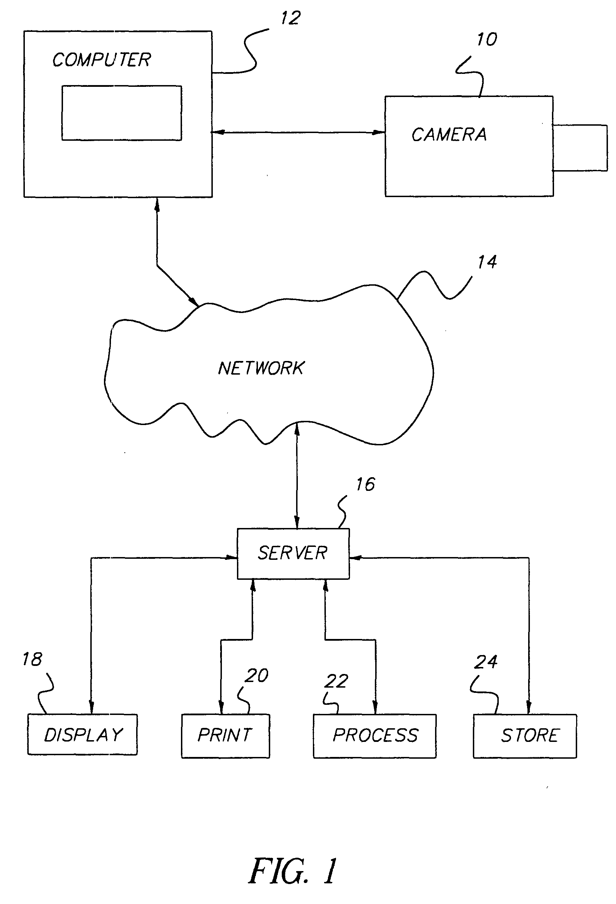

A proactive imaging system according to the present invention is shown in Fig. 1. A camera 10 captures an image along with metadata that contains information on the capture conditions such as lens focal length, brightness, subject distance, illuminant, f-number, whether the flash fired, time and place of image capture, and any other potentially useful information. According to one embodiment, the camera electronically captures a digital image and the digital image is directly transferred to a computer 12. It will be understood that computer 12 can be any apparatus with a microprocessor, such as a personal computer, set top box, or any other appliance containing a microprocessor with capability to handle digital images, such as communication equipment, including cellular phones, personal digital assistants (PDA's), or appliances such as television receivers, refrigerators, stereo equipment, or game consoles, or transportation vehicles equipped with telecommunication capability. According to another embodiment, the camera captures the image using photographic film. The film is developed and scanned to produce a digital image that is transferred to the computer 12. The digital image data is associated with a software agent in the electronic camera to form the proactive image according to the present invention. The proactive image is an object in an object oriented programming system. Alternatively, the digital image may be associated with the software agent in the computer 12 when the image data is transferred to the computer to form the proactive image. In the embodiment where the image is captured on photographic film, the proactive image includes the latent image on the film plus a reference to the location of the software agent on a communications network. The reference included with the film can be optically, magnetically, or photographically encoded on the film using well known techniques for recording data on a film in a camera.

Alternatively, the proactive image may be created by associating the software agent with the image after the developed film is scanned but before the digital image data is transferred to the computer 12 or after it is transferred to the computer by means of software stored on the computer.

The proactive image may also be embodied as a hard copy image, such as a slide or photographic print with accompanying software agent location data. The location data can be stored on the print, for example by a magnetic layer on the print, a printed bar code on the back of the print, an infrared readable layer on the front or back of the print having software agent location data. Alternatively, the software agent location data can be embedded in the image on the print, using steganographic data embedding techniques. These techniques can also be used in a digital camera 10, or in the computer 12 to embed the location of the software agent directly into the digital image.

The present invention provides the proactive image with the means to determine what actions are to be taken by the use of image understanding software algorithms that are part of the proactive digital image or are referenced by the proactive digital image. The image understanding algorithms may use the pixel code values in the image the metadata, or both in order to determine actions to be taken. For example, the proactive digital image may determine that the image is of high quality and action should be taken to print multiple copies of the image data. The proactive images may also communicate with each other. For instance, if several proactive images are present on computer 12 inter-proactive image communication can determine which image is of the highest quality and only the highest quality image will act to print the image data. According to another embodiment, the proactive image may use the metadata associated with the image indicating whether the flash fired, the brightness when the image was captured, and the subject distance in order to determine the probability that a redeye defect exists in the image. If the probability exceeds a predetermined threshold the proactive image takes the actions necessary to obtain redeye detection and correction.

The computer 12 is connected by means of a network 14 to a server 16. The proactive image may obtain the address on the network of the server 16 from the camera 10, from data on the photographic film, or from data stored on the computer 12. The proactive image may transfer the image data to the server 16 over the network 14. Alternatively, the server 16 may transfer executable code to the computer 12 to be used by the proactive image. The server 16 may be instructed by the proactive image to display 18, print 20, process 22, or store 24 the image data.

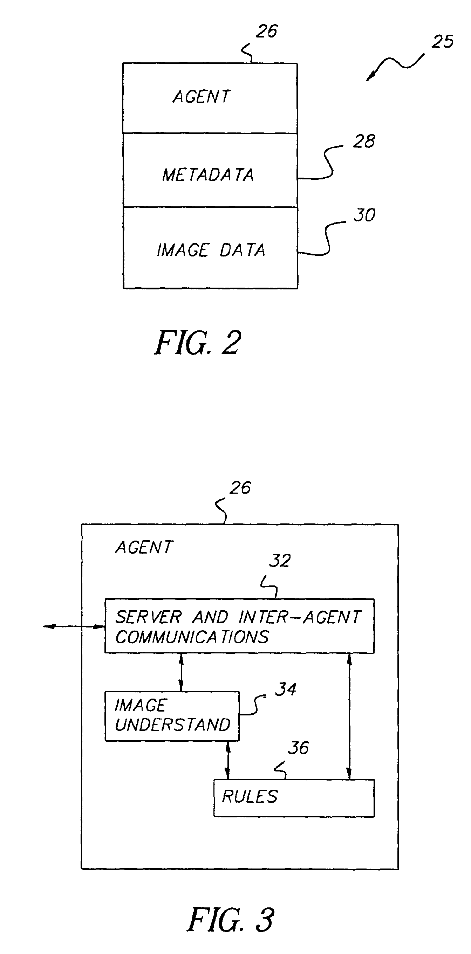

Referring in Fig. 2 a proactive image, generally designated 25 consists of a software agent 26, metadata 28 and image data 30. The metadata 28 may include information on image capture conditions, place, time, and other information that may be useful such as the address of an image processing server that may be used by the software agent 26. The metadata portion of the proactive image may be omitted if the camera is not capable of supplying metadata. The image data 30 is the raw pixel code values plus other information such as image size and colorspace. This may also be a link to the image data.

The software agent 26 exhibits three properties that are characteristic of an agent. It can cooperate, learn, and is autonomous. This is described in detail referring to Fig. 3. The functions of the agent 26 is divided into three units. The communication unit 32 is able to contact, exchange data with, and invoke actions of servers over a network and other agents. This unit may use the Internet Inter-ORB Protocol (IIOP), Remote Method Invocation (RMI), Distributed Component Object Model (DCOM), or any other standard for communication between distributed objects. The communication unit along with the other units allows the agent 26 to cooperate with other agents and other software objects. The image understanding unit 34 is able to learn the characteristics of the image data using methods of pattern recognition. The image understanding unit 34 may also use the metadata to aid the pattern recognition process. The rules unit 36 is responsible for autonomous action. It contains a rule system or other means of artificial intelligence that, based on input from the image understanding unit 34, determines the actions that need to be taken. An action that requires interaction with a server, other agents, or any other software object is taken through means of the communication unit 32.

## Claims

1. A proactive imaging system, comprising
a) a proactive image including image data and an associated software agent for determining operations to be applied to the digital image data, including image processing and communicating the digital image data, and for initiating the determined operations;
b) a communication network;
c) a client computer connected to the communication network for activating the software agent in the proactive image; and
d) a server connected to the communication network, the server including means for processing displaying or storing the digital image.

2. The proactive imaging system claimed in claim 1, further comprising: an electronic camera including means for creating a digital image and means for associating a software agent with the digital image to form the proactive image.

3. The proactive imaging system claimed in claim 2, wherein the software agent is associated with the image by appending a software program embodying the agent to the digital image.

4. The proactive imaging system claimed in claim 2, wherein the software agent is associated with the image by appending a reference to the communication network accessible location of a software program embodying the agent to the digital image.

5. The proactive imaging system claimed in claim 2, wherein the software agent is associated with the image by embedding a reference to the communication network accessible location of a software program embodying the agent in the digital image.

6. The proactive imaging system claimed in claim 1, further comprising: an electronic camera including means for creating a digital image and wherein the client computer includes means for associating the software agent with the digital image to form the proactive image.

7. The proactive imaging system claimed in claim 6, wherein the software agent is associated with the image by appending a software program embodying the agent to the digital image.

8. The proactive imaging system claimed in claim 6, wherein the software agent is associated with the image by appending a reference to the location of a software program embodying the agent to the digital image.

9. The proactive imaging system claimed in claim 6, wherein the software agent is associated with the image by embedding a reference to the location of a software program embodying the agent in the digital image.

10. The proactive imaging system claimed in claim 1, further comprising a photographic camera for capturing an image on film, the camera including means for associating the software agent with the image on the film.

11. The proactive imaging system claimed in claim 10, wherein the means for associating the software agent comprises means for recording a reference to the location of a software program embodying the agent.

12. The proactive imaging system claimed in claim 11, wherein the means for associating the software agent is a modulatable light source and the reference is recorded optically on the film.

13. The proactive imaging system claimed in claim 11, wherein the means for associating the software agent is a magnetic recording head and the reference is recorded magnetically on a magnetic layer on the film.

14. An electronic camera comprising an image sensor for creating a digital image, and means for associating a software agent with the digital image for determining operations to be applied to the digital image data, including image processing and communicating the digital image data.

15. The electronic camera claimed in claim 14, further comprising means for associating metadata relating to image capture conditions with the digital image.

16. A proactive image, comprising: image data and a software agent associated with the image data for determining operations to be applied to the digital image data, including image processing and communicating the digital image data.

17. The proactive image claimed in claim 16, further comprising metadata relating to image capture conditions.
